# EUROPÄISCHE PATENTANMELDUNG

(11) **EP 0 882 490 A1**
(43) Veröffentlichungstag der Anmeldung: **09.12.1998**
(21) Anmeldenummer: 98890021.3
(22) Anmeldetag: 27.01.1998
(51) Int. Cl.: B01D 53/83, B01D 53/10

(54) **Verfahren zur Reinigung von schadstoffbelasteten Gasen**

(30) Priorität: 05.06.1997 AT 961/97
(71) Anmelder: ALOIS SCHEUCH GESELLSCHAFT m.b.H., A-4910 Ried i.I. (AT)
(72) Erfinder: Lisberger, Manfred, 4752 Riedau (AT); Weinberger, Robert, 4910 Ried im Innkreis (AT)
(74) Vertreter: Köhler-Pavlik, Johann, Dipl.-Ing.

(57) **Zusammenfassung**

Die Erfindung betrifft. ein Verfahren und eine Anlage zur Reinigung von schadstoffbelasteten Gasen. Zur Schaffung eines besonders einfachen Verfahrens mit hohem Wirkungsgrad, ist vorgesehen, daß das aus dem Gasstrom abgetrennte Additiv im wesentlichen durch die Schwerkraft in eine Einrichtung zur Zwischenlagerung transportiert wird, und daß das zwischengelagerte, in den Gasstrom rückzuführende Additiv in einem Mengenverhältnis des Additivs zum Gasvolumen von 50 bis 10000 g/m³, vorzugsweise von 500 bis 5000 g/m³ in einen im wesentlichen vertikal nach oben strömenden Gasstrom beigemengt wird. Dieses Verfahren führt beispielsweise eine Anlage durch, bei der die Zwischenlagerung des Additivs direkt unterhalb des Filters (5) erfolgt, zwischen der Zuleitung (1) und dem Filter (5) eine im wesentlichen vertikale Reaktionsleitung (18), in der das Gas nach oben strömt, unmittelbar neben dem Filter (5) angeordnet ist, und bei der die Dosiereinrichtung (12) für das rückzuführende Additiv in der Reaktionsleitung (18) mündet.

## Beschreibung

Die Erfindung betrifft ein Verfahren zur Reinigung von schadstoffbelasteten Gasen, insbesondere von Rauchgasen umfassend die Beimengung eines Additivs in den schadstoffbelasteten Gasstrom, die Abtrennung des Additivs aus dem Gasstrom, die Zwischenlagerung und Füllstandsregelung des Additivs, die Ausschleusung eines allfälligen Additivüberschusses, sowie die Rückführung des Additivs in den Gasstrom. Weiters betrifft die Erfindung auch eine Anlage zur Durchführung dieses Verfahrens mit zumindest einer Einrichtung zur Beimengung eines Additivs in den schadstoffbelasteten Gasstrom, zumindest einer Zuleitung für das schadstoffbelastete Gas, zumindest einem Filter, zumindest einer Ableitung für das gereinigte Gas, zumindest einer Einrichtung zur Zwischenlagerung und Füllstandsregelung des Additivs und Ausschleusung eines allfälligen Additivüberschusses, und zumindest einer Dosiereinrichtung für das in den Gasstrom rückzuführende Additiv. Unter Additiv fallen dabei alle Reaktions- und/oder Adsorptionsmittel, welche dazu dienen, die jeweiligen Schadstoffe im Rohgas zu binden bzw. mit den Schadstoffen zu reagieren, um deren Abscheidung zu ermöglichen.

Ein Verfahren und eine Anlage zur Reinigung von schadstoffbelasteten Gasen, insbesondere von Rauchgasen dieser Art ist beispielsweise aus der AT 401 890 bekannt, bei der zur Erhöhung des Anteils an rückgeführtem Additiv (Rezirkulat) und zur Erzielung einer wirtschaftlichen und effizienten Gasreinigung mit hohem Abscheidegrad erfindungsgemäß eine Wirbelschicht aus partikelförmigem inerten Material erzeugt und das Additiv in oder ober diese Wirbelschicht aufgegeben wird.

Aufgabe der vorliegenden Erfindung ist die Schaffung eines Verfahrens zur Reinigung von schadstoffbelasteten Gasen, insbesondere Rauchgasen, mit dem in möglichst einfacher und somit wirtschaftlicher Weise der Wirkungsgrad erhöht werden kann.

Gelöst wird diese Aufgabe dadurch, daß das aus dem Gasstrom abgetrennte Additiv im wesentlich durch die Schwerkraft in eine Einrichtung zur Zwischenlagerung transportiert wird, und daß das zwischengelagerte, in den Gasstrom rückzuführende Additiv in einem Mengenverhältnis des Additivs zum Gasvolumen von 50 bis 10000 g/m³, vorzugsweise von 500 bis 5000 g/m³ in einen im wesentlichen vertikal nach oben strömenden Gasstrom beigemengt wird. Erfindungsgemäß wird daher das Additiv ohne eigene Fördereinrichtungen zwischengelagert. Die Zwischenlagerung dient dabei zur Vergleichmäßigung des Additivs und dazu, daß im System kein sogenannter "Gaskurzschluß" eintritt. Von der Zwischenlagerung wird das Additiv direkt in einen vertikal nach oben strömenden Gasstrom beigemengt und dadurch von der Strömung nach oben mitgerissen. Durch die große Menge des rückgeführten Additivs im Bereich von 50 bis 10000g pro m³ Gas erhält das Zweiphasengemisch bestehend aus dem schadstoffbelasteten Gas und dem Additiv ein signifikant anderes Verhalten als reines Gas. Die Unterschiede zu reinem Gas sind durch eine veränderte Dichte und eine veränderte Scheinviskosität des Gemischs charakterisiert. Man spricht auch von einem sogenannten "Dichtstrom". Erst die Kombination der hohen Mengen rückgeführten Additivs zusammen mit einem durch das einfache Verfahren bedingten relativ niedrigen Druckverlust macht eine besondere Wirtschaftlichkeit des Verfahrens möglich. Das erfindungsgemäße Verfahren zeichnet sich durch besondere Einfachheit aus.

Wenn das rückzuführende Additiv dem schadstoffbelasteten Gas in einem Bereich mit erhöhter Geschwindigkeit des Gasstroms beigemengt wird, kann die Einbringung des Rezirkulats in den Rohgasstrom verbessert werden. Dies kann durch Querschnittsverringerung der das Gas führenden Leitung, z.B. in Form einer Venturikehle geschehen.

Eine verbesserte Reinigungswirkung bei gleichbleibender Einfachheit des Verfahrens wird dadurch erzielt, daß das schadstoffbelastete Gas indirekt befeuchtet und gekühlt wird. Somit können herkömmliche Verfahrensschritte zur Kühlung des Rohgases entfallen.

Vorteilhafterweise wird das schadstoffbelastete Gas durch Befeuchtung des zwischengelagerten, rückzuführenden Additivs, vorzugsweise durch Besprühen mit Kühlflüssigkeit, insbesondere mit Wasser, indirekt, d.h. außerhalb des Gasstromes befeuchtet und gekühlt. Die Kühlung und Befeuchtung des Gases erfolgt nach Einbringung des befeuchteten Additivs in den Rohgasstrom durch Verdampfung des im Additiv gespeicherten Kühlmediums. Auch dieses Verfahrensmerkmal trägt zur Einfachheit des Verfahrens bei, da die üblichen Verfahrensschritte zur Kühlung des Rohgases im Bereich der Zuleitung mit all ihren Nachteilen, wie Anbacken und Korrosion entfallen können.

Eine weitere Aufgabe der vorliegenden Erfindung ist die Schaffung einer Anlage zur Durchführung des erfindungsgemäßen Verfahrens, welche besonders einfach und somit kostengünstig herstellbar ist, einen sehr hohen Wirkungsgrad bei der Reinigung aufweist, und einen hohen Materialdurchsatz und energiesparenden Betrieb ermöglicht. Darüberhinaus sollen Standzeiten infolge der Reinigung der Anlage reduziert werden, sodaß eine höhere Verfügbarkeit resultiert.

Gelöst wird diese Aufgabe dadurch, daß die oder jede Einrichtung zur Zwischenlagerung und Füllstandsregelung des Additivs und Ausschleusung eines allfälligen Additivüberschusses unterhalb des oder jedes Filters angeordnet ist, daß zwischen der oder jeder Zuleitung und dem oder jedem Filter zumindest eine im wesentlichen vertikale Reaktionsleitung unmittelbar neben dem oder jedem Filter angeordnet ist, wobei das Gas in der oder jeder Reaktionsleitung nach oben strömt, und daß die oder jede Dosiereinrichtung in der oder jeder Reaktionsleitung mündet. Durch die Anordnung der Einrichtung zur Zwischenlagerung und Füllstandsregelung des Additivs und Ausschleusung eines allfälligen Additivüberschusses direkt unterhalb des Filters wird das durch das Filter aus dem Gasstrom abgetrennte Additiv ohne eigene Fördereinrichtungen durch die Schwerkraft in die Einrichtung zur Zwischenlagerung und Füllstandsregelung und Ausschleusung eines allfälligen Additivüberschusses transportiert. Von dort erfolgt über die Dosiereinrichtung die Rückführung des Additivs in die konstruktiv bedingt unmittelbar neben dem Filter liegende Reaktionsleitung, wodurch nur eine relativ kurze Rückführungsdistanz bewältigt werden muß. Als Folge dessen können sehr hohe Mengen an Additiv unter vertretbarem Energieaufwand in den Gasstrom rückgeführt werden. Das Additiv wird durch den in der Reaktionsleitung nach oben gerichteten Gasstrom mitgerissen und reinigt das Gas von den Schadstoffen. Die Reaktionsleitung besteht im wesentlichen aus einem einfachen Rohr ohne jegliche mechanische Komponenten, wie Verteilbleche, Schaufeln od. ähnlichem. Durch die sogenannten einbaulosen Komponenten kann die Strömungsgeschwindigkeit des Rohgases mit vertretbarem Druckverlust und vertretbarem Energieaufwand erhöht werden. Durch die höhere Strömungsgeschwindigkeit ist eine bessere Verteilung des rückgeführten Additivs ohne zusätzliche Einrichtungen, wie z.B. einer Wirbelschicht möglich. Dadurch resultiert ein erhöhter Materialdurchsatz. Aufgrund der einfachen Konstruktion ist auch eine verringerte Verstopfungsgefahr der Rückleitung und in der Folge eine höhere Verfügbarkeit bzw. kürzere Standzeiten der Anlage verbunden. Gleichzeitig ist eine komprimierte und einfache Konstruktion der Anlage möglich.

Vorteilhafterweise mündet die oder jede Dosiereinrichtung innerhalb oder unmittelbar oberhalb eines Abschnitts der oder jeder Reaktionsleitung mit verringertem Querschnitt, beispielsweise einer Venturikehle. Durch die Einbringung des Rezirkulats im Bereich z.B. einer Venturikehle, wo aufgrund des verringerten Querschnitts höhere Strömungsgeschwindigkeiten des Rohgases herrschen, als in der Zuleitung, wird eine homogene Verteilung des Additivs im Rohgasstrom und dadurch eine effektivere Reinigung des schadstoffbelasteten Gases erzielt.

Bei einer Ausführungsform der erfindungsgemäßen Anlage wird die oder jede Einrichtung zur Zwischenlagerung und Füllstandsregelung des Additivs und Ausschleusung eines allfälligen Additivüberschusses durch einen unterhalb dem oder jedem Filter bzw. unterhalb einem unter dem oder jedem Filter angeschlossenen Filtertrog mit Filterschnecke angeordneten vorzugsweisen Staubsammeltrichter mit einer Austragsschnecke und Austragsschleuse gebildet. Dies stellt eine einfache Variante zur Zwischenlagerung Additivs dar. Das Material läuft dabei an den geneigten Wänden des Staubsammeltrichters nach unten und wird dort im unteren Bereich des Trichters gepuffert. Ein allfälliger Additivüberschuß wird mittels einer Schnecke od. dgl. ausgeschleust und in einen Behälter zur Entsorgung abgeführt. Das Rezirkulat wird in den Gasstrom rückgeleitet. Soll die Bauhöhe der Gesamtanlage niedriger ausfallen, wird unter dem Filter ein Filtertrog mit Filterschnecke angeordnet und das vom Filter abgeschiedene Additiv zu einer Auslaßleitung mit geringerem Querschnitt als das gesamte Filter befördert. Dadurch fällt der darunter angeordnete Staubsammeltrichter niedriger aus, wodurch die gesamte Höhe der Anlage und damit der Material- und Montageaufwand reduziert werden kann.

Gemäß einem weiteren Merkmal der erfindungsgemäßen Anlage ist die oder jede Dosiereinrichtung unmittelbar unterhalb des oder jedes vorzugsweisen Staubsammeltrichters angeordnet. Somit wird das zwischengelagerte Additiv direkt ohne weitere Fördereinrichtungen in den schadstoffbelasteten Gasstrom rückgeleitet.

Sollte eine Kühlung der schadstoffbelasteten Gase erforderlich sein, so kann dies, wie herkömmlich mit Hilfe eines vorgeschalteten Einspritzkühlers (Quench) geschehen. Alternativ dazu kann gemäß einem weiteren Erfindungsmerkmal zumindest eine Einrichtung zur Befeuchtung und Kühlung des schadstoffbelasteten Gases außerhalb des Gasstroms angeordnet sein. Durch diese indirekte Befeuchtung und Kühlung wird die Lösung der erfindungsgemäßen Aufgabe noch weiter verbessert. Die Feuchtigkeit verbessert darüberhinaus die Reaktion zwischen den abzureinigenden Schadstoffen des Gases und dem Additiv. Durch die indirekte Befeuchtung und Kühlung können herkömmliche Kühleinrichtungen, z.B. Einspritzkühler (Quench) entfallen. Bei Vorhandensein solcher Einspritzkühler wäre eine Erhöhung der Strömungsgeschwindigkeit des Rohgases in der Zuleitung nur unter hohem Druckverlust und hohem Energieaufwand möglich.

Vorteilhafterweise wird die oder jede Einrichtung zur Befeuchtung und Kühlung des schadstoffbelasteten Gases durch zumindest eine vorzugsweise Düse zur Besprühung des zwischengelagerten, rückzuführenden Additivs mit Kühlflüssigkeit, insbesondere mit Wasser gebildet. Somit wird das Rohgas indirekt durch das rückgeführte Additiv befeuchtet und gekühlt. Da die Flüssigkeit nicht in den Gasstrom eingespritzt wird, wo aufgrund der Schadstoffe saure Komponenten vorhanden sind, sondern außerhalb des Gasstromes, in dem Bereich, wo aufgrund des Additivs keine sauren Komponenten mehr existieren, wird die Korrosionsgefahr der Zuleitungen und Elemente der Anlage reduziert. Damit wird entweder die Lebensdauer der Elemente erhöht oder es sind billigere Materialien zu deren Herstellung verwendbar, da keine so hohen Anforderungen an die Korrosionsbeständigkeit gestellt werden müssen. Die Kühlung des Gases erfolgt indirekt durch Befeuchtung des Additivs, welches in den Gasstrom rückgeführt wird, durch Entzug der Verdampfungsenergie.

Wenn die oder jede vorzugsweise Düse in dem oder jeden vorzugsweisen Staubsammeltrichter zur Besprühung der Kühlflüssigkeit, insbesondere auf die Oberfläche des zwischengelagerten, rückzuführenden Additivs angeordnet ist, kann der Aufwand zur Befeuchtung und Kühlung weiter reduziert werden, da das Versprühen der Kühlflüssigkeit nicht so fein erfolgen muß, da die innere Oberfläche des Additivs aufgrund der Mikro- und Makroporen sehr groß ist. Im Gegensatz dazu muß bei herkömmlichen Einspritzkühlungen im Gasstrom das Wasser außerordentlich fein versprüht werden.

Um die oder jede vorzugsweise Düse zur Einspritzung der Kühlflüssigkeit vor Verschmutzung insbesondere durch das herabfallende Additiv zu schützen, ist diese vorteilhafterweise von einem vorzugsweisen Schutzrohr umgeben.

Nachfolgend werden zwei bevorzugte Ausführungsbeispiele einer Anlage zur Durchführung des erfindungsgemäßen Verfahrens zur Reinigung von Rauchgasen unter Bezugnahme auf die beigefügten Zeichnungen näher erläutert.

Darin zeigen
- Fig. 1: eine schematische Darstellung einer erfindungsgemäßen Anlage zur Reinigung von Rauchgasen mit indirekter Wasserkühlung, und
- Fig. 2: eine Variante einer Anlage zur Reinigung von Rauchgasen mit geringerer Bauhöhe.

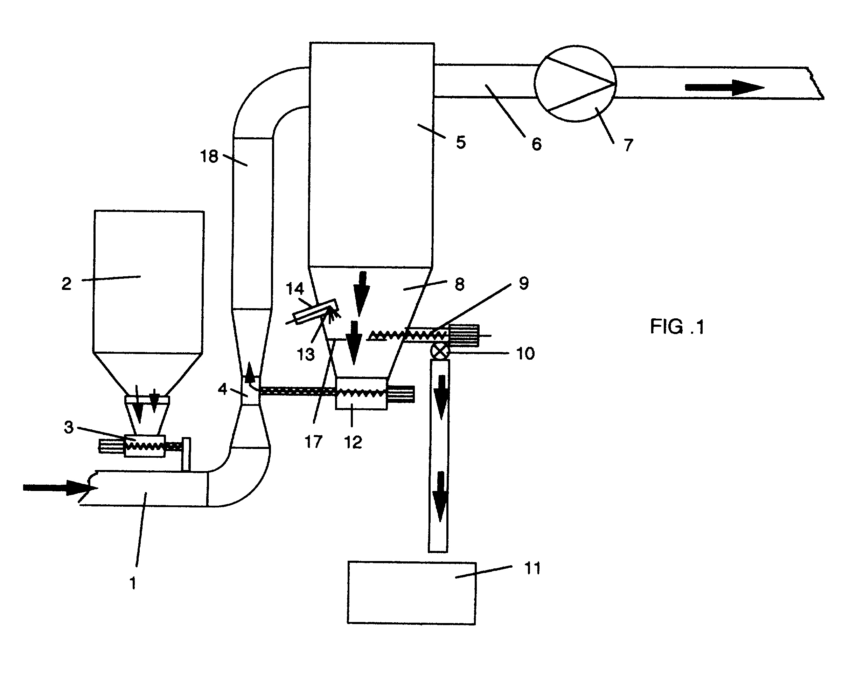

Bei der in Fig. 1 schematisch dargestellten Anlage handelt es sich um eine Anlage zur Reinigung von Rauchgasen, wie sie in vielen Bereichen der Industrie auftreten. Die schadstoffbelasteten Rauchgase werden über eine Zuleitung 1 der Anlage zugeführt. In die Zuleitung 1 werden die für die Reinigung der Rauchgase notwendigen Additive (Reaktions-und/oder Adsorptionsmittel), welche in einem Behälter 2 gebunkert (zwischengelagert) sind, mit Hilfe einer Dosiereinrichtung 3, beispielsweise einer Dosierschnecke dem Rauchgas in gewünschter Dosis beigemengt. Die Additive liegen üblicherweise in Form sehr feiner Partikel vor. Theoretisch ist die Beimengung des frischen Additivs an einer beliebigen Stelle der Anlage möglich. Die Rauchgase gelangen von unten in eine im wesentlichen vertikale Reaktionsleitung 18 und danach von oben in den Filter 5. Die Reaktionsleitung 18 besteht im vorliegenden Fall lediglich aus einem Rohr od. dgl. mit vorzugsweise rundem oder ovalen Querschnitt. Im gezeigten Ausführungsbeispiel weist die Reaktionsleitung 18 einen Abschnitt mit verringertem Querschnitt, zum Beispiel in Form einer Venturikehle 4 auf. Der Filter 5 kann beispielsweise als Schlauchfilter mit mehreren Filterschläuchen ausgeführt sein. Vor den Filterschläuchen kann eine Vorabscheidung mit Hilfe von Lamellen erfolgen. Das Reingas wird über eine Ableitung 6 mit Hilfe eines Ventilators 7 an die Atmosphäre abgegeben. An die Unterseite des Filters 5 schließt ein Staubsammeltrichter 8 an, an dessen Wänden das bei der Abreinigung des Filters 5 herabfallende Material nach unten gleitet. Im unteren Bereich des Staubsammeltrichters 8 ist eine Austragsschnecke 9 angeordnet, mit welcher ein allfälliger Überschuß an Additiv über eine Austragsschleuse 10 in einen Behälter 11 ausgeschleust wird. Mit der Austragsschnecke 9 und der Austragsschleuse 10 wird das maximale Volumen bzw. der maximale Füllstand 17 im Sammeltrichter 8 definiert. Am unteren Ende des Staubsammeltrichters 8 ist eine Dosiereinrichtung 12 angeordnet, mit welcher die Menge des rückgeführten Additivs eingestellt werden kann und somit ein gleichmäßiger Materialfluß gewährleistet wird. Die Dosiereinrichtung 12 kann durch eine Dosierschnecke realisiert werden. Der Rezirkulationsanteil des Additivs wird vorzugsweise im Bereich der Venturikehle 4 oder knapp oberhalb der Venturikehle 4 in den Rohgasstrom eingeschleust.

Aufgrund der erfindungsgemäßen Konstruktion und die Zuführung der Rohgase durch die Zuleitung 1 von unten, kann die vertikale Reaktionsleitung 18 sehr eng neben dem Filter 5 angeordnet werden. Aufgrund dieser Anordnung wird der Förderweg für das Rezirkulat kurz und wegen der dadurch verringerten Gefahr des Verstopfens ist ein höherer Durchsatz des rückgeführten Additivs und somit ein höherer Rezirkulationsanteil möglich. Als Folge dessen kann wiederum der tatsächliche Überschuß an dem Additiv gesteigert werden, wodurch die Anlage gegenüber Schwankungen des Schadstoffgehalts der Rohgase unempfindlich wird. Durch die Querschnittsverringerung der Reaktorleitung 18 im Bereich der Venturikehle 4 wird die Strömungsgeschwindigkeit erhöht und somit ein besseres Mitreißen des rückgeführten Additivs erzielt. Anstelle der Venturikehle 4 kann aufgrund der einfachen Konstruktion der Anlage die gesamte Strömungsgeschwindigkeit des Rohgases mit vertretbarem Druckverlust und vertretbarem Energieaufwand erhöht werden.

Ist eine Kühlung der Rauchgase erforderlich, so erfolgt diese erfindungsgemäß durch Einspritzung von Kühlflüssigkeit, insbesondere von Wasser auf die Oberfläche des zwischengelagerten Additivs bzw. in den fallenden Strom des Additivs nach dem Filter 5. Vorzugsweise ist die Düse 13 zur Einspritzung der Kühlflüssigkeit im Bereich des Staubsammeltrichters 8 oberhalb der Austragsschnecke 9 angeordnet. Zum Schutz der Düse 13 vor dem Materialstrom, ist diese vorzugsweise durch ein Schutzrohr 14 umgeben, welches konzentrisch zur Düse 13 verläuft und in dem vorzugsweise ein Luftstrom die Düse 13 vor Staubzutritt schützt. Durch die Bewegung der Austragsschnecke 9 ist die sich bildende Oberfläche des Materials unter ständiger Bewegung. Die Austragsschnecke regelt auch den Füllstand 17 des im Staubsammeltrichter 8 zwischengelagerten Additivs. Da eine sehr große Materialoberfläche vorhanden ist, muß dieses nicht so fein besprüht werden, wie es bei Kühlung vor der vertikalen Reaktionsleitung 18 des Rohgases der Fall wäre. Darüberhinaus wird die Kühlflüssigkeit erfindungsgemäß im Bereich außerhalb des Gasstromes zugesetzt, wodurch die Korrosionsgefahr verringert wird. In herkömmlichen Anlagen erfolgt die Kühlung der Rohgase in der Zuleitung beispielsweise mit einem Einspritzkühler (Quench) im sauren Bereich der Gase. Dadurch bilden sich an den Rohrinnenwänden der Anlage Kondensationströpfchen der Kühlflüssigkeit, welche die sauren Komponenten des Rauchgases enthalten und somit zu Korrosion der Rohre führen. Infolge dessen wird die Lebensdauer der Anlage reduziert und der Wartungsaufwand erhöht bzw. die Herstellungskosten durch Verwendung beständigerer Materialien für die Rohrleitungen erhöht. Die Kühlung der erfindungsgemäßen Anlage erfolgt indirekt durch Besprühung des rückgeführten Additivs.

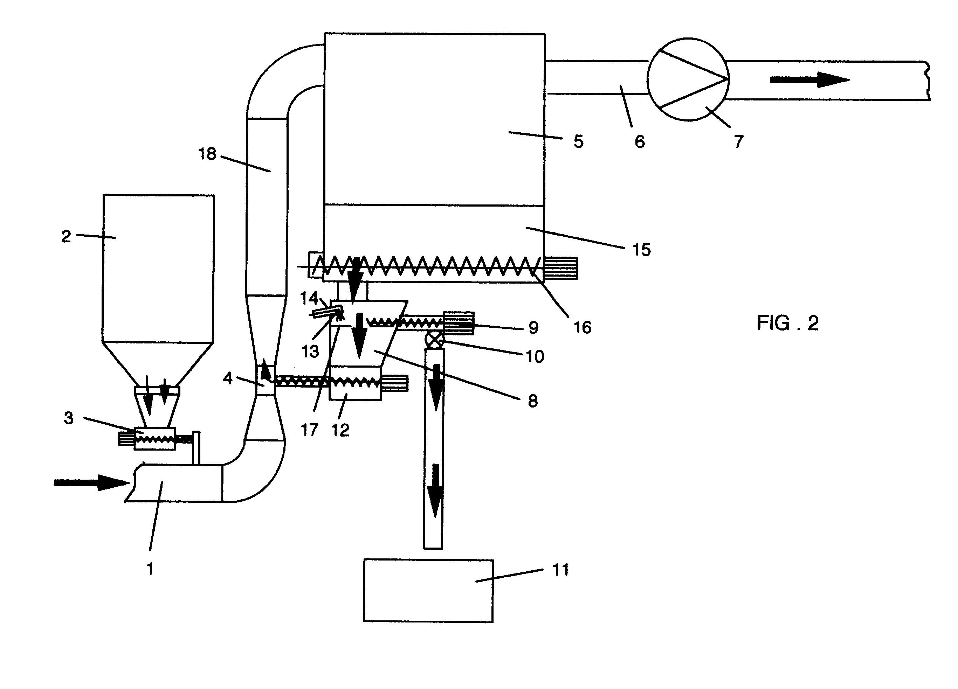

Der Staubsammeltrichter 8 gemäß Fig. 1 muß einen gewisse Mindestneigung aufweisen, damit das Material durch die Schwerkraft getragen nach unten abläuft und es zu keinen Materialanhäufungen an der Wand kommt. Dadurch ist eine gewisse Mindesthöhe für den Staubsammeltrichter 8 erforderlich, wodurch die Bauhöhe der gesamten Anlage vergrößert wird. Um die Bauhöhe der Anlage zu verringern und dadurch Material- und Montagekosten einzusparen ist bei der Variante der Anlage gemäß Fig. 2 anstelle des Staubsammeltrichters 8 gemäß Fig. 1 an der Unterseite des Filters 5 eine Filtertrog 15 angeschlossen, der eine Filtertrogschnecke 16 zur Beförderung des Materials aufweist, vorgesehen. Der Staubsammeltrichter 8 kann anschließend unter dem Filtertrog 15 in wesentlich kleineren Ausführungen angeordnet werden. Dadurch kann die Gesamthöhe reduziert werden. Eine allfällige Kühlung der Rauchgase erfolgt durch Einspritzung von Kühlwasser oder Kühlflüssigkeit mit Hilfe einer Düse 13.

Die erfindungsgemäße Anlage zeichnet sich durch ihre Einfachheit aus, welche durch den Wegfall der üblichen eingangsseitigen Einspritzkühlung (Quench) und den Wegfall von Transportmechanismen für das Rezirkulat gegeben ist. Darüberhinaus ist die Lebensdauer der Anlage durch die allfällige erfindungsgemäße indirekte Kühlung des Rohgases erhöht bzw. können Kosten für höherwertige, korrosionsbeständige Materialien eingespart werden. Mit der erfindungsgemäßen Anlage sind Feststoffbeladungen in der Zuleitung des schadstoffbelasteten Gases zwischen 50 und 10000 g/m³, vorzugsweise 500 bis 5000 g/m³ erzielbar.

## Patentansprüche

1. Verfahren zur Reinigung von schadstoffbelasteten Gasen, insbesondere von Rauchgasen umfassend die Beimengung eines Additivs in den schadstoffbelasteten Gasstrom, die Abtrennung des Additivs aus dem Gasstrom, die Zwischenlagerung und Füllstandsregelung des Additivs, die Ausschleusung eines allfälligen Additivüberschusses, sowie die Rückführung des Additivs in den Gasstrom, dadurch gekennzeichnet, daß das aus dem Gasstrom abgetrennte Additiv im wesentlichen durch die Schwerkraft in eine Einrichtung zur Zwischenlagerung transportiert wird, und daß das zwischengelagerte, in den Gasstrom rückzuführende Additiv in einem Mengenverhältnis des Additivs zum Gasvolumen von 50 bis 10000 g/m³, vorzugsweise von 500 bis 5000 g/m³ in einen im wesentlichen vertikal nach oben strömenden Gasstrom beigemengt wird.

2. Verfahren nach Anspruch 1, dadurch gekennzeichnet, daß das rückzuführende Additiv dem schadstoffbelasteten Gas in einem Bereich mit erhöhter Geschwindigkeit des Gasstroms beigemengt wird.

3. Verfahren nach Anspruch 1 oder 2, dadurch gekennzeichnet, daß das schadstoffbelastete Gas indirekt befeuchtet und gekühlt wird.

4. Verfahren nach Anspruch 3, dadurch gekennzeichnet, daß das schadstoffbelastete Gas durch Befeuchtung des zwischengelagerten, rückzuführenden Additivs, vorzugsweise durch Besprühen mit Kühlflüssigkeit, insbesondere mit Wasser, indirekt befeuchtet und gekühlt wird.

5. Anlage zur Durchführung des Verfahrens nach mindestens einem der Ansprüche 1 bis 4, mit zumindest einer Einrichtung (2, 3) zur Beimengung eines Additivs in den schadstoffbelasteten Gasstrom, zumindest einer Zuleitung (1) für das schadstoffbelastete Gas, zumindest einem Filter (5), zumindest einer Ableitung (6) für das gereinigte Gas, zumindest einer Einrichtung zur Zwischenlagerung und Füllstandsregelung des Additivs und Ausschleusung eines allfälligen Additivüberschusses, und zumindest einer Dosiereinrichtung (12) für das in den Gasstrom rückzuführende Additiv, dadurch gekennzeichnet, daß die oder jede Einrichtung zur Zwischenlagerung und Füllstandsregelung des Additivs und Ausschleusung eines allfälligen Additivüberschusses unterhalb des oder jedes Filters (5) angeordnet ist, daß zwischen der oder jeder Zuleitung (1) und dem oder jedem Filter (5) zumindest eine im wesentlichen vertikale Reaktionsleitung (18) unmittelbar neben dem oder jedem Filter (5) angeordnet ist, wobei das Gas in der oder jeder Reaktionsleitung (18) nach oben strömt, und daß die oder jede Dosiereinrichtung (12) in der oder jeder Reaktionsleitung (18) mündet.

6. Anlage nach Anspruch 5, dadurch gekennzeichnet, daß die oder jede Dosiereinrichtung (12) innerhalb oder unmittelbar oberhalb eines Abschnitts der oder jeder Reaktionsleitung (18) mit verringertem Querschnitt, beispielsweise einer Venturikehle (4) mündet.

7. Anlage nach Anspruch 5 oder 6, dadurch gekennzeichnet, daß die oder jede Einrichtung zur Zwischenlagerung und Füllstandsregelung des Additivs und Ausschleusung eines allfälligen Additivüberschusses durch einen unterhalb dem oder jedem Filter (5) bzw. unterhalb einem unter dem oder jedem Filter (5) angeschlossenen Filtertrog (15) mit Filterschnecke (16) angeordneten vorzugsweisen Staubsammeltrichter (8) mit einer Austragsschnecke (9) und Austragsschleuse (10) gebildet ist.

8. Anlage nach Anspruch 7, dadurch gekennzeichnet, daß die oder jede Dosiereinrichtung (12) unmittelbar unterhalb des oder jedes vorzugsweisen Staubsammeltrichters (8) angeordnet ist.

9. Anlage nach mindestens einem der Ansprüche 5 bis 8, dadurch gekennzeichnet, daß zumindest eine Einrichtung zur Befeuchtung und Kühlung des schadstoffbelasteten Gases außerhalb des Gasstroms angeordnet ist.

10. Anlage nach Anspruch 9, dadurch gekennzeichnet, daß die oder jede Einrichtung zur Befeuchtung und Kühlung des schadstoffbelasteten Gases durch zumindest eine vorzugsweise Düse (13) zur Besprühung des zwischengelagerten, rückzuführenden Additivs mit Kühlflüssigkeit, insbesondere mit Wasser gebildet ist.

11. Anlage nach Anspruch 10, dadurch gekennzeichnet, daß die oder jede vorzugsweise Düse (13) in dem oder jeden vorzugsweisen Staubsammeltrichter (8) zur Besprühung der Kühlflüssigkeit, insbesondere auf die Oberfläche des zwischengelagerten, rückzuführenden Additivs angeordnet ist.

12. Anlage nach Anspruch 10 oder 11, dadurch gekennzeichnet, daß die oder jede vorzugsweise Düse (13) vorzugsweise von einem Schutzrohr (16) umgeben ist.
